# EUROPEAN PATENT SPECIFICATION

(11) **EP 4 560 426 B1**
(45) Date of publication and mention of the grant of the patent: **15.04.2026**
(21) Application number: 24210342.2
(22) Date of filing: 01.11.2024
(51) Int. Cl.: G01C 21/20, G01C 21/16, G05D 1/243, G05D 1/248, G05D 111/63, G05D 105/15, G05D 109/10, G05D 111/10, G05D 107/20

(54) **IMPROVED VISUAL NAVIGATION FOR A ROBOTIC WORK TOOL**
VERBESSERTE VISUELLE NAVIGATION FÜR EIN ROBOTISCHES ARBEITSGERÄT
AMÉLIORATION DE LA NAVIGATION PAR VISION POUR UN OUTIL DE TRAVAIL ROBOTISÉ

(30) Priority: 24.11.2023 SE 2351350
(43) Date of publication of application: 28.05.2025
(73) Proprietor: Husqvarna AB, 561 82 Huskvarna (SE)
(72) Inventor: Liljedahl, Marcus, Huskvarna (SE); Glimberg, Tommy, Huskvarna (SE); Rangsjö, Jonas, Huskvarna (SE)

(56) References cited:
- OCHMAN MARCIN ET AL: "RGB-D Odometry for Autonomous Lawn Mowing", 6 October 2021, 20211006, PAGE(S) 81 - 90, XP047612585
- ANDREY SOLOVIEV ET AL: "Integration of GPS and vision measurements for navigation in GPS challenged environments", POSITION LOCATION AND NAVIGATION SYMPOSIUM (PLANS), 2010 IEEE/ION, IEEE, PISCATAWAY, NJ, USA, 4 May 2010 (2010-05-04), pages 826 - 833, XP031707097, ISBN: 978-1-4244-5036-7
- ZHOU DINGFU ET AL: "Ground-Plane-Based Absolute Scale Estimation for Monocular Visual Odometry", IEEE TRANSACTIONS ON INTELLIGENT TRANSPORTATION SYSTEMS, IEEE, PISCATAWAY, NJ, USA, vol. 21, no. 2, 3 March 2019 (2019-03-03), pages 791 - 802, XP011770680, ISSN: 1524-9050, [retrieved on 20200203], DOI: 10.1109/TITS.2019.2900330

## Description

### TECHNICAL FIELD

This application relates to a robotic lawnmower and in particular to a system and a method for providing an improved navigation for robotic lawnmowers, such as lawnmowers.

### BACKGROUND

Automated or robotic lawnmowers such as robotic lawnmowers are becoming increasingly more popular and so is the use of the robotic lawnmower in various types of operational areas. Furthermore, there is also a trend for satellite navigation and virtual borders for such robotic lawnmowers to enable for a faster installation compared to using boundary wires. At the same time the navigational requirements regarding various obstacles (houses, flower beds, garden furniture and so on) are also increasing.

This poses strong requirements for navigational systems which have to be able to operate with high accuracy at different times of day and different times of year, in some areas even year-round.

However, even the best satellite navigation may suffer from reduced accuracy in some areas, where satellite reception may be reduced. Technologies such as Real-Time Kinetics (RTK), where a beacon acts to increase the accuracy also in areas where the satellite reception may be poor have been used for many years, but also these techniques may suffer from low or reduced accuracy in some areas. furthermore, the virtual boundaries utilized with satellite navigation does not take into account obstacles that are not mapped, such as obstacles as mentioned above.

Visual Odometry (hereafter VO) and other (Visual) Simultaneous Localization and Mapping ((V)SLAM) technologies have been employed to take such obstacles into account when navigating as they will be automatically mapped along with the work area during operation or during a training session prior to operation, depending on the system. However, such VO techniques are dependent on a scale being determined so that a translation between frames, instances of a point cloud generated by the SLAM technique, is correctly interpreted by the navigation system. Different manners of determining such a scale have been proposed, but they all suffer from some problems and are not suitable for operation during any time of day or time of year as is required by modern robotic lawnmowers. Not being able to determine the scale correctly will lead to a reduced accuracy for the navigation system.

The prior art paper entitled Ground-Plane-Based Absolute Scale Estimation for Monocular Visual Odometry by Dingtu Zhou and Yuchao Dai discloses that recovering an absolute metric scale from a monocular camera is a challenging but highly desirable problem for monocular camera-based systems. By using different kinds of cues, various approaches have been proposed for scale estimation, such as camera height and object size. In this paper, first, the authors summarize different kinds of scale estimation approaches. Then, the authors propose a robust divide-and-conquer absolute scale estimation method based on the ground plane and camera height by analyzing the advantages and disadvantages of different approaches. By using the estimated scale, an effective scale correction strategy has been proposed to reduce the scale drift during the monocular visual odometry estimation process. Finally, the effectiveness and robustness of the proposed method have been verified on both public and self-collected image sequences.

The prior art paper entitled Integration of GPS and Vision Measurements for Navigation in GPS Challenged Environments by Andrey Soloviev, University of Florida and Donald Venable, Air Force Research Laboratory, Sensors Directorate, is a paper that investigates into the feasibility of a combined use of Global Positioning System (GPS) and vision-based measurements for navigation in challenged GPS environments such as urban canyons and indoors. In these environments, a GPS-only navigation solution is generally not feasible. However, limited GPS measurements (for example, for two or three satellites) may still be available. These limited measurements can be exploited to enhance the efficacy of alternative navigation aids such as vision-aided inertial. This paper presents a method for the combination of limited GPS carrier phase measurements with features that are extracted from images of a monocular video camera. An integrated GPS/vision solution estimates position changes and orientation of the camera's body-frame; and, initializes ranges to vision-based features. Simulation results and initial experimental results are presented to validate the proposed integration method and demonstrate its performance.

Thus, there is a need for an improved manner of providing navigation that is both easy to install and that does not suffer from a reduced accuracy during any time of day or time of year.

### SUMMARY

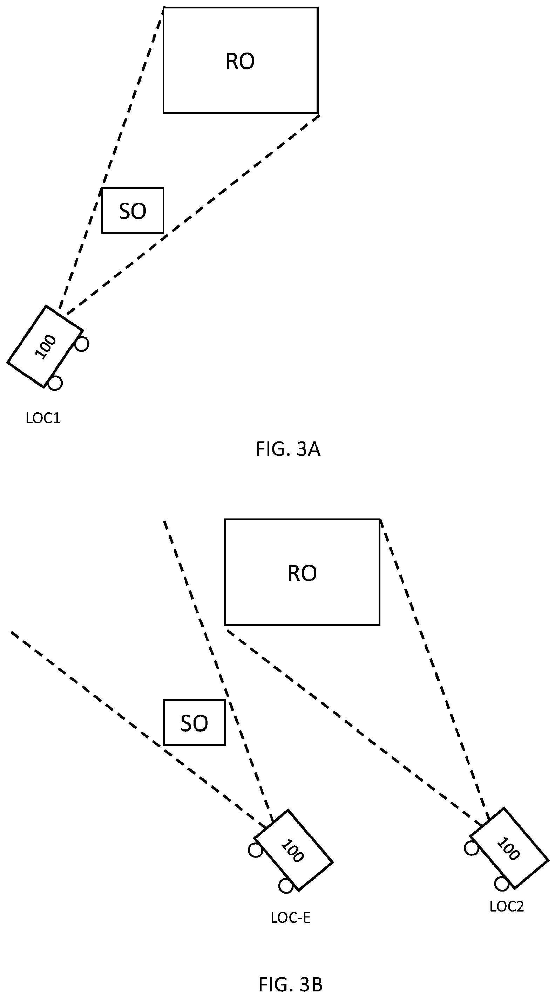

The inventors are proposing to solve the problems discussed above and herein with reference to figures 3A and 3B by combining two navigational techniques by inventively realizing that they supplement each other perfectly in that the satellite navigation may be used to determine a reference for the height determination to be used when the satellite is at its weakest.

It is therefore an object of the teachings of this application to overcome or at least reduce those problems by providing a robotic lawnmower comprising one or more satellite navigation sensors, a visual sensor and a controller, wherein the controller is configured to utilize the one or more satellite navigation sensors to determine a reference for a ground-plane estimation and to utilize the visual sensor to perform visual odometry navigation, and to utilize ground-plane estimation based on the visual sensor and the reference from the satellite navigation sensors to provide a scale for the visual odometry navigation as per the appended claims.

In some embodiments the controller is further configured to perform the visual odometry navigation through Visual Simultaneous Localization and Mapping, VSLAM.

In some embodiments the visual sensor is a mono-sensor.

The controller is further configured to utilize ground-plane estimation based on the visual sensor by determining a height above ground for the visual sensor to provide the scale for the visual odometry navigation, wherein the height above ground is calibrated based on a previous height above ground.

In some embodiments the satellite navigation sensor is a GPS sensor.

In some embodiments the satellite navigation sensor is a RTK sensor.

The inventors are thus proposing to solve the problems discussed above and herein by combining two navigational techniques by inventively realizing that they supplement each other perfectly in that one's main strength is exactly in the situation where the other is at the weakest.

Further embodiments and aspects are as in the attached patent claims and as discussed in the detailed description.

Other features and advantages of the disclosed embodiments will appear from the following detailed disclosure, from the attached dependent claims as well as from the drawings. Generally, all terms used in the claims are to be interpreted according to their ordinary meaning in the technical field, unless explicitly defined otherwise herein. All references to "alan/the [element, device, component, means, step, etc.]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention will be described in further detail under reference to the accompanying drawings in which:
Figure 1 shows a schematic view of the components of an example of a robotic lawnmower being a robotic lawnmower according to some example embodiments of the teachings herein;
Figure 2 shows a schematic view of a robotic lawnmower system according to some example embodiments of the teachings herein;
Figure 3A shows a schematic view of a robotic lawnmower experiencing a prior art problem;
Figure 3B shows a schematic view of a robotic lawnmower experiencing a prior art problem;
Figure 4A shows a schematic view of a robotic lawnmower according to some example embodiments of the teachings herein;
Figure 4B shows a schematic view of a robotic lawnmower according to some example embodiments of the teachings herein;
Figure 4C shows a schematic view of a robotic lawnmower according to some example embodiments of the teachings herein; and
Figure 5 shows a corresponding flowchart for a method according to some example embodiments of the teachings herein.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein. Like reference numbers refer to like elements throughout.

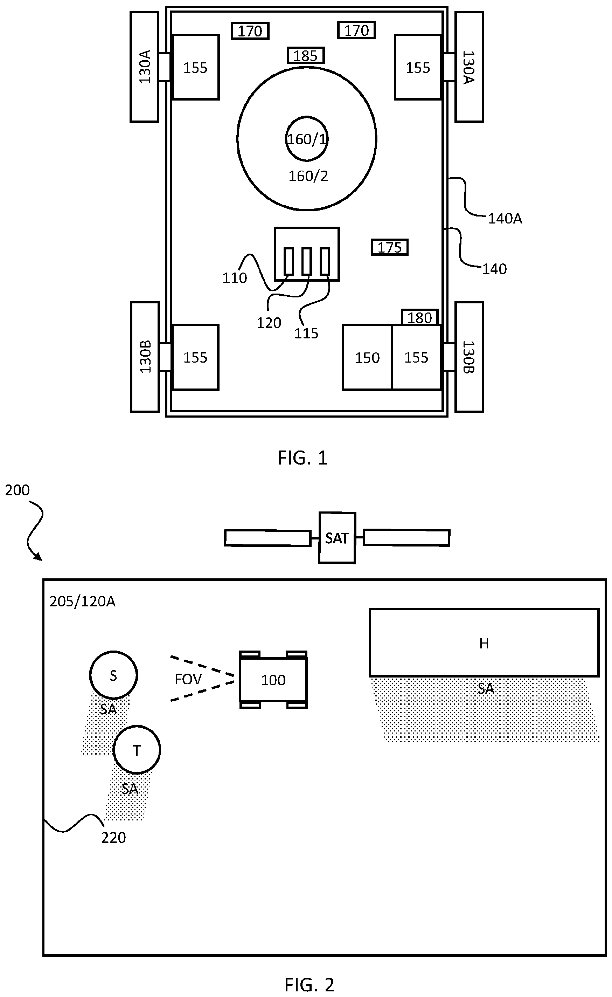

Figure 1 shows a schematic overview of a robotic lawnmower 100. The robotic lawnmower 100 may be a multi-chassis type or a mono-chassis type (as in figure 1). A multi-chassis type comprises more than one main body parts that are movable with respect to one another. A mono-chassis type comprises only one main body part.

It should be noted that robotic lawnmower may be of different sizes, where the size ranges from merely a few decimetres for small garden robots, to even more than 1 meter for large robots arranged to service for example airfields.

It should also be noted that the robotic lawnmower is a self-propelled robotic lawnmower, capable of autonomous navigation within a work area, where the robotic lawnmower propels itself across or around the work area in a pattern (random or predetermined). In some embodiments, the robotic lawnmower is a semi-controlled or at least supervised autonomous work tool, such as farming equipment or large lawnmowers, for example riders or comprising tractors being autonomously controlled.

The robotic lawnmower 100 has a main body part 140, possibly comprising a chassis 140 and an outer shell 140A, and a plurality of wheels 130 (in this example four wheels 130, but other number of wheels are also possible, such as three or six).

The main body part 140 substantially houses all components of the robotic lawnmower 100. At least some of the wheels 130 are drivably connected to at least one electric motor 155 powered by a battery 150. It should be noted that even if the description herein is focused on electric motors, combustion engines may alternatively be used, possibly in combination with an electric motor. In the example of figure 1, each of the wheels 130 is connected to a common or to a respective electric motor 155 for driving the wheels 130 to navigate the robotic lawnmower 100 in different manners. The wheels, the motor 155 and possibly the battery 150 are thus examples of components making up a propulsion device. By controlling the motors 155, the propulsion device may be controlled to propel the robotic lawnmower 100 in a desired manner, and the propulsion device will therefore be seen as synonymous with the motor(s) 150.

The robotic lawnmower 100 also comprises a controller 110 and a computer readable storage medium or memory 120. The controller 110 may be implemented using instructions that enable hardware functionality, for example, by using executable computer program instructions in a general-purpose or special-purpose processor that may be stored on the memory 120 to be executed by such a processor. The controller 110 is configured to read instructions from the memory 120 and execute these instructions to control the operation of the robotic lawnmower 100 including, but not being limited to, the propulsion and navigation of the robotic lawnmower.

The controller 110 may be implemented using any suitable, available processor or Programmable Logic Circuit (PLC). The memory 120 may be implemented using any commonly known technology for computer-readable memories such as ROM, FLASH, DDR, or some other memory technology.

The robotic lawnmower 100 is further arranged with a wireless communication interface 115 for communicating with other devices, such as a server, a personal computer, a smartphone, the charging station, and/or other robotic lawnmowers. Examples of such wireless communication devices are Bluetooth^{®}, WiFi^{®} (IEEE802.11b), Global System Mobile (GSM) and LTE (Long Term Evolution), to name a few.

The robotic lawnmower 100 also comprises a grass cutting device 160, such as a rotating blade 160/2 driven by a cutter motor 160/1.

The controller 110 in combination with the electric motor 155 and the wheels 130 forms the base of a navigation system (possibly comprising further components) for the robotic lawnmower, enabling it to be self-propelled as discussed.

The robotic lawnmower 100 further comprises at least one satellite signal navigation sensor 175 configured to provide navigational information (such as position) based on receiving one or more signals from a satellite - possibly in combination with receiving a signal from a beacon. In some embodiments the satellite navigation sensor is a GPS (Global Positioning System) device or other Global Navigation Satellite System (GNSS) device. In some embodiments the satellite navigation sensor is a RTK sensor.

The robotic lawnmower 100 may also comprise deduced reckoning sensors 180. The deduced reckoning sensors may be odometer, accelerometer, inertial measurement units (IMU) or other deduced reckoning sensors. In some embodiments, the deduced reckoning sensors are comprised in the propulsion device, wherein a deduced reckoning navigation may be provided by knowing the current supplied to a motor and the time the current is supplied, which will give an indication of the speed and thereby distance for the corresponding wheel.

The robotic lawnmower 100 also comprises a visual sensor, such as a camera 185. The visual sensor 185 is in some embodiments a mono-sensor (such as a mono camera). The visual sensor 185 is configured for providing the controller (possibly as part of an internal processing arrangement in a camera or a dedicated processing arrangement for the image sensor 185) a stream of images of the surroundings in front of the image sensor (within its Field-of-View, reference FOV in figure 2) to enable for visual odometry, such as enabling the robotic lawnmower to perform Visual SLAM (VSLAM) navigation. Visual simultaneous localization and mapping (vSLAM), refers to the process of calculating the position and orientation of a camera, with respect to its surroundings, while simultaneously mapping the environment. The process uses only visual inputs from the camera. Applications for Visual SLAM include augmented reality, robotics, and autonomous driving. Visual SLAM systems work by tracking set points through successive camera frames to triangulate their position, while simultaneously using this information to approximate camera pose. Basically, the goal of these systems is to map their surroundings in relation to their own location for the purposes of navigation.

By combining inputs from the visual sensor 185 and the deduced reckoning sensors 180, the VSLAM becomes more robust. However, as the deduced reckoning sensors are expensive and suffers from problems of reduced or low accuracy, it is beneficial if the robotic lawnmower 100 is able to perform VSLAM that is not reliant on the deduced reckoning sensors. The robotic lawnmower 100 is thus - in some embodiments - arranged without deduced reckoning sensors other than the (mono) visual sensor 185. The visual sensor is hereafter referred to as the visual odometry (VO) sensor 185.

For enabling the robotic lawnmower 100 to navigate with reference to a boundary wire emitting a magnetic field caused by a control signal transmitted through the wire, the robotic lawnmower 100 is - in some embodiments - configured to have at least one magnetic field sensor 170 arranged to detect the magnetic field and for detecting the wire and/or for receiving (and possibly also sending) information to/from a signal generator. The sensors 170 are connected to the controller 110, possibly via filters and an amplifier, and this enables the controller 110 to determine whether the robotic lawnmower 100 is close to or crossing the boundary wire, or inside or outside an area enclosed by the boundary wire.

The robotic lawnmower 100 is in some embodiments arranged to operate according to a map application representing one or more work areas (and possibly the surroundings of the work area(s)) stored in the memory 120 of the robotic lawnmower 100. The map application may be generated or supplemented as the robotic lawnmower 100 operates or otherwise moves around in the work area 205. The robotic lawnmower 100 is in some embodiments arranged to navigate according to the map based on the satellite navigation sensor 175 and/or the VO sensor 185.

Figure 2 shows a robotic lawnmower system 200 in some embodiments. The schematic view is not to scale. The robotic lawnmower system 200 comprises one or more robotic lawnmowers 100 according to the teachings herein. It should be noted that the operational area 205 shown in figure 2 is simplified for illustrative purposes. The schematic view of figure 2 also illustrates a graphic representation of a map application 120A stored in the memory of the robotic lawnmower 100 as discussed in the above.

The work area 205 is enclosed or bounded by a boundary 220 which may be virtual or physical or a combination of the two. The boundary 220 is - in some embodiments - specified in the map application 120A and the robotic lawnmower 100 is enabled to navigate the work area 205 based on the satellite navigation sensor(s) 175, and/or the VO sensor 185 (possibly supported by the deduced reckoning sensors 180).

In some embodiments the robotic lawnmower is arranged or configured to traverse and operate in work areas that are not essentially flat, but contain terrain that is of varying altitude, such as undulating, comprising hills or slopes or such. The ground of such terrain is not flat and it is not straightforward how to determine an angle between a sensor mounted on the robotic lawnmower and the ground. The robotic lawnmower is also or alternatively arranged or configured to traverse and operate in a work area that contains obstacles that are not easily discerned from the ground. Examples of such are grass or moss-covered rocks, roots or other obstacles that are close to ground and of a similar colour or texture as the ground. The robotic lawnmower is also or alternatively arranged or configured to traverse and operate in a work area that contains obstacles that are overhanging, i.e. obstacles that may not be detectable from the ground up, such as low hanging branches of trees or bushes. Such a garden is thus not simply a flat lawn to be mowed or similar, but a work area of unpredictable structure and characteristics. The work area 205 exemplified with referenced to figure 2, may thus be such a non-uniform work area as disclosed in this paragraph that the robotic lawnmower is arranged to traverse and/or operate in.

As is shown in figure 2 there may be obstacles such as houses (referenced H), structures, trees (referenced T), stones (referenced S) to mention a few examples that block signal reception in certain areas, hereafter referred to as shadowed areas (referenced SA in figure 2).

It should be noted herein that for illustrative purposes only a single satellite SAT is shown, whereas - and as a skilled person would know - it requires a reliable reception of signals from at least 3 satellites and/or beacons for the robotic lawnmower to be able to determine a position with any kind of accuracy. In fact, in most implementations many more signals are required. It should also be noted that even in a shadowed area, the robotic lawnmower may be able to receive signals from more than three satellites, but not at a signal level where a reliable lock can be established. A shadowed area SA can thus be defined as an area where the robotic lawnmower is unable to receive sufficiently reliable signal reception, i.e. when the number of signals received reliably is under a threshold number, and where a signal is reliably received when it is received at a signal quality level exceeding a threshold value.

It should be noted that even though it is not specifically shown, a beacon is also arranged in or adjacent to the work area in embodiments where the robotic lawnmower is arranged to utilize RTK navigation. The beacon is considered to be represented by the satellite SAT shown in figure 2.

In the below, several embodiments of how the robotic lawnmower may be adapted will be disclosed. It should be noted that all embodiments may be combined in any combination providing a combined adaptation of the robotic lawnmower.

Figure 3A shows a schematic view of a robotic lawnmower, operating based on a visual sensor, such as a mono camera, experiencing a problem as discussed in the background according to some example embodiments of the teachings herein. In figure 3A a real-life object, referenced RO is recorded by a robotic lawnmower 100. However, without knowing - or using the incorrect - scale, the object may be perceived as an object further away or closer to than the real-life object RO. In figure 3A one such object is shown, being scaled smaller than intended and referenced SO. The object is recorded at a first location LOC 1 and its location is determined based on the position of the seen or recorded object RO. As the robotic lawnmower 100 moves, and it is about to determine its new location based on how it has moved relative the recorded object RO, such as through an angle to the object. However, if the scale is wrong, the robotic lawnmower 100 will determine its location incorrectly. Figure 3B shows two possible locations for the robotic lawnmower 100. One being determined with the wrong scale LOC-E and one being the true second location LOC2. As can be seen the two locations differ quite a lot. It is thus important to determine and use a scale accurately or the location cannot be accurately determined.

Using satellite navigation (such as GPS or RTK) is one way of achieving a scale, as the satellite navigation sensor will give accurate references (such as distance travelled or distance to object according to a map application) that can be used to determine the scale. However, satellite navigation sensors are prone to introducing errors as satellite reception varies (exhibits a noisy profile) and may even be insufficient in many operating areas, such as in so-called satellite shadows.

Using deduced reckoning navigation (such as odometry) is another way of achieving a scale, as the deduced reckoning sensors will give accurate references (such as distance travelled) that can be used to determine the scale. However, deduced reckoning sensors are also prone to errors as they can be incorrectly calibrated or be influenced by external factors, such as wheel slip or magnetic disturbances.

Using the camera to determine a ground plane and the height top that ground plane can also be used to determine the scale as the height over the ground plane can be used as a reference. However, the ground plane may be incorrectly estimated and especially the height to it, as the ground plane may have grass which grows to different lengths which will give different heights over the ground plane, and thus affect the scale. The ground plane may also be incorrectly estimated if the plane in front of the robotic lawnmower is at an angle (rising or sloping). The use of the ground plane thus suffers from errors that are more or less constant during one operation.

However, the inventors have realized after inventive and insightful reasoning that the two manners of determining a scale may be used in combination. They may in some embodiments be used as supplements to one another, depending on the situation and in some embodiments, in parallel, where the satellite (or deduced reckoning) is utilized to provide a reference for the determination of the grass or ground height.

In some embodiments the robotic lawnmower is configured to determine a reference (such as travelled distance) utilizing the satellite and/or deduced reckoning. This reference is then used to determine the height of the ground plane (or height of grass -assuming that the height of the grass is similar in front of the robotic lawnmower as long as it travels to unserviced areas. The satellite (or deduced reckoning) navigation is thus used to enable setting the height of grass correctly, thereby supplementing or enforcing the visual navigation based on the height estimation. By storing previously determined heights above ground, which have been stored by the robotic lawnmower when the satellite reception is reliable, the newly determined height above ground can be calibrated based on the previously determined heights.

In the following discussion the reference for the estimation of a ground plane (such as determining the height above ground) can be seen as the first scale discussed below, and the determined scale can be seen as the second scale discussed below, wherein the two scales are used in combination.

It should be noted that in situations where it - for some reason - is not possible to determine the ground-plane estimate accurately or reliably, the scale from a previous frame or time may be used as the current scale.

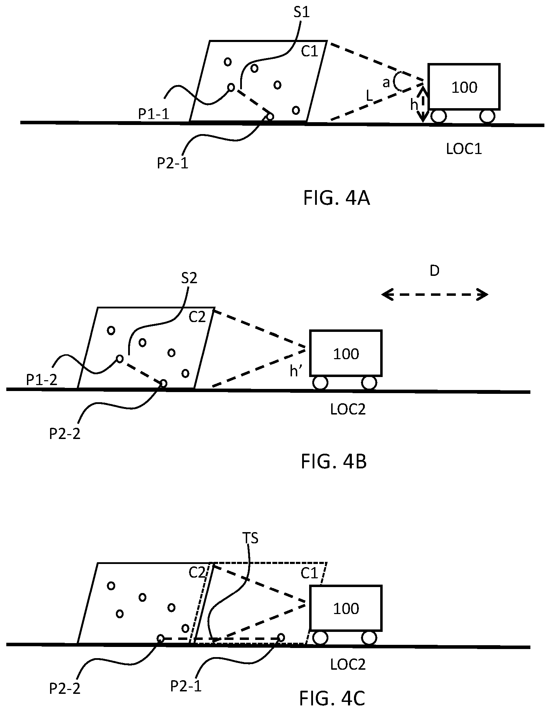

Figure 4A shows a schematic view of a robotic lawnmower 100 as in figure 1, where the robotic lawnmower 100 is configured to operate based on both satellite navigation utilizing one or more satellite navigation sensors 175 according to the map application 120A and according to visual odometry based on the VO sensor 185. The robotic lawnmower is configured to rely on the VO sensor especially when the satellite navigation sensors 175 does not receive reliable satellite signals. As discussed in the above, the VO sensor navigation commonly experience scaling problems as discussed above, which problems are solved by the teachings herein.

In the example of figure 4A a first cloud C1 of points P (P1-1, P2-1) is shown schematically. In some embodiments the first cloud C1 corresponds to a frame for the visual sensor 185 that has been generated by the controller 110. As is illustrated a scale S1 is indicated in the figure, and in this example is shown as the distance between a first point P1-1 and a second point P2-1. However, this is only for illustrative purposes and as a skilled person would understand, many different manners of determining the scale in a frame are available to a skilled person, such as based on satellite navigation.

Figure 4A also shows how a height h for the VO sensor 185 may be determined based on a determined distance L and knowing an angle a of the field of view (FOV) for the VO sensor 185. The distance L is the distance to where the ground (or other supporting surface) is detected in the image and the angle will actually be the angle for the vector to where the ground is detected. In the simple case where the ground is flat, the mathematical relationship becomes h/L= sin(a/2). The same formula can be used to determine a length to a point or object on the ground, by determining the time when the object is at an angle in the frame.

As is seen in figure 4B, the robotic lawnmower 100 has travelled a distance D from the first location LOC1 of figure 4A. It should be noted that even if the distance travelled is illustrated as a linear (straight) distance, the travelled distance may also include a rotation (vertical and/or horizontal) of the robotic lawnmower as well as sideways translations.

In the new or second location LOC2 a new frame is captured and a second or further cloud C2 is generated. The second cloud may be generated as a new cloud or be an update of the first cloud C1. As for the first cloud C1, there are several points P1-2, and P2-2 and a second scale S2. To be able to correctly determine the new pose (includes location and orientation) for the robotic lawnmower 100, the translation between the first cloud (or frame) C1 and the second cloud (or frame) C2 has to be determined. This translation may be referenced as a translation scale, TS. The translation scale is determined in two manners according to the teachings herein. The two manners are in some embodiments employed in parallel and simultaneous. The two manners are in some embodiments employed as alternatives to one another, such as using the VO sensors with ground plane estimation when the satellite reception is lost or unreliable. In some embodiments the robotic lawnmower is enabled to select which manner to utilize based on the surroundings as will be discussed in the below.

The first manner is reliant on the satellite navigation sensor 175 and hereafter referred to as the satellite mode. In the satellite mode, the distance D is determined based on determining the coordinates for the first location LOC1, determining the coordinates for the second location LOC2, whereby the distance D becomes the difference between the two locations. This distance can be used to determine the translation scale as would be known to a skilled person.

The satellite manner works well when the robotic lawnmower 100 is not in a shadowed area SA such as in an open area.

Figure 4C shows a schematic view where the robotic lawnmower 100 is at the second location as in figure 2, but where the first frame or cloud C1 is also shown. As the robotic lawnmower 100 reaches a point P2-1, wherein reaches may be defined as being able to determine a distance to the point with respect to the robotic lawnmower 100 reliably, the robotic lawnmower 100 is able to determine a scale to the same point in a subsequent frame or cloud, such as in the second cloud C2. The translation scale TS can thereby be determined based on the distance between the point P2-1 in the first cloud C1 and the same point P2-2 in the second (subsequent) cloud C2.

The second manner is reliant on the VO sensor 185 and is hereafter referred to as the VO mode. In the VO mode, the distance to the ground is determined as discussed above, wherein the distance to ground is used to provide a translation scale.

The VO mode works well in surroundings having several objects or points to be used, such as cluttered areas, and works at a lower accuracy in open areas. The VO mode will drift after some time. In contrast the ground plane estimation will not drift, but suffers from noise.

As the inventors have realized, that these two techniques may thus beneficially be used as they supplement each other perfectly and will be run in parallel in the VO mode.

In embodiments where the two modes are run in parallel, the translational scales determined for each mode may be utilized to correct or calibrate each other.

As mentioned in the above, the robotic lawnmower 100 is - in some embodiments - enabled to determine or select which mode to utilize.

In some such embodiments the controller is configured to determine a number of points to be used in the frame or cloud and as this number of points falls under a threshold value, the satellite mode is selected as being the primary mode for determining the translation scale.

In some alternative or supplemental such embodiments, the controller is configured to determine that the robotic lawnmower 100 is for example in a shadow area by determining that the number of reliably received signals is below a threshold value, and if so, the VO mode (including the ground-plane estimation) is selected as being the primary mode for determining the translation scale.

In some alternative or supplemental such embodiments, the controller is configured to determine that the translation scale determined for one of the modes undergoes a change exceeding a change threshold value, and in response thereto select the other mode as the primary mode for determining the translation scale.

The description above discloses the general operating modes, and more details on these will be given in the below.

In the satellite mode, the robotic lawnmower 100 is configured to build a point cloud of features using the VO sensor 185 and possibly the satellite sensor 175. In embodiments where satellite sensors are utilized, the point cloud will not suffer from the scale problems since the satellite sensor 175 will provide the translation scale. The point cloud can be built using Essential matrix, homography or other methods together with a bundle adjustment where the satellite (for example RTK) positions are used as constraints. In some embodiments the robotic lawnmower 100 is configured to utilize techniques such as Essential matrix or homography in order to give a better accuracy of the pose compared to triangulating the points directly from satellite-determined positions. In any case the satellite-determined positions has to be used to correct the scale. The points in this cloud will then have positions relative the satellite (RTK) system origin.

When the robotic lawnmower 100 determines that the satellite reception is lost or unreliable, the robotic lawnmower 100 is - in some embodiments - configured to localize itself in the point cloud using PNP (Perspective-n-Point) i.e. get perspective (Pose) from n-number of 3D points and/or bundle adjustment. The VO sensor will be utilized to find features in a frame (such as C2) and match them with features in previous images (such as C1) so the points in the image can be matched with points in the point cloud. The camera will then get a position relative the satellite-determined positions without the scale problem. The VO sensor 185 will also find new features that are not found in the previous point cloud, and those new points can be added to the point cloud with scale and be used for the next localization in the next frame. The scale of the point cloud and the position of the VO sensor will drift after some time, but the robotic lawnmower behavior can be adapted so it finds a spot with satellite-coverage again. The drift can also be compensated for by the height determination, which should be relatively the same and may thus indicate a drift and how to correct such a drift.

The second manner, i.e. the VO and ground plane mode, combines VO sensor navigation with ground plane estimation in order to solve any scaling problems as discussed in the above and to supplement the VO sensor navigation, such as VSLAM. VO in satellite mode, (when no RTK) and VO in groundplane mode suffers different problems. The VO sensor navigation will drift over time. However, the ground plane estimation algorithm, will suffer from noise and may sometimes be unavailable when the VO sensor can't see the ground (e.g if the camera only sees a wall). The robotic lawnmower is thus enabled to solve a common problem by combining a drifting sensor (VO sensor) with a noisy sensor (ground plane estimation) which can increase the performance of the overall scale estimation task.

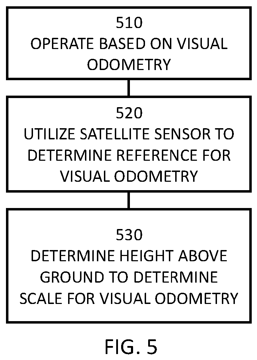

Figure 5 shows a flowchart for a general method according to herein. The method is for use in a robotic lawnmower as in figure 1 in a manner as discussed above. The method comprises the robotic lawnmower utilizing 510 the visual sensor 185 to perform visual odometry navigation, utilizing 520 the satellite sensor to provide a reference for the visual odometry navigation and determining 530 a height above ground for the visual sensor 185 to provide a scale (TS) for the visual odometry navigation.

It should be noted that either of or a combination of the first translation scale and the second translation scale can be utilized as the scale needed for visual odometry navigation.

## Claims

1. A robotic lawnmower (100) comprising one or more satellite navigation sensors (175), a visual sensor (185) and a controller (110), wherein the controller (110) is configured to
utilize the one or more satellite navigation sensors (175) to determine a reference for a ground-plane estimation and to
utilize the visual sensor (185) to perform visual odometry navigation, and to
utilize ground-plane estimation based on the visual sensor (185) and the reference from the satellite navigation sensors (175) to provide a scale (TS) for the visual odometry navigation, wherein the robotic lawnmower (100) is **characterized in that** the controller (110) is further configured to utilize ground-plane estimation based on the visual sensor (185) by determining a height above ground for the visual sensor (185) to provide the scale (TS) for the visual odometry navigation, wherein the height above ground is calibrated based on a previous height above ground.

2. The robotic lawnmower (100) according to claim 1, wherein the controller (110) is further configured to perform the visual odometry navigation through Visual Simultaneous Localization and Mapping, VSLAM.

3. The robotic lawnmower (100) according to claim 1 or 2, wherein the visual sensor (185) is a mono-sensor.

4. The robotic lawnmower (100) according to any preceding claim, wherein the controller (110) is further configured to
determine that satellite reception is lost or unreliable and when the robotic lawnmower (100) determines that the satellite reception is lost or unreliable, localize itself in point cloud of the visual navigation using PNP (Perspective-n-Point) and utilize the visual sensor (185) to find features in an image and match them with features in previous images so points in the image can be matched with points in the point cloud to get a position relative the satellite-determined positions without the scale problem.

5. The robotic lawnmower (100) according to any preceding claim, wherein the satellite navigation sensor is a GPS sensor (175).

6. The robotic lawnmower (100) according to claim 5, wherein the satellite navigation sensor is a RTK sensor (175).

## Patentansprüche

1. Roboterrasenmäher (100), umfassend einen oder mehrere Satellitennavigationssensoren (175), einen visuellen Sensor (185) und eine Steuerung (110), wobei die Steuerung (110) konfiguriert ist zum
Nutzen des einen oder der mehreren Satellitennavigationssensoren (175), um eine Referenz für eine Grundebenenschätzung zu bestimmen und zum
Nutzen des visuellen Sensors (185), um eine visuelle Odometrienavigation durchzuführen und zum
Nutzen der Grundebenenschätzung basierend auf dem visuellen Sensor (185) und der Referenz von den Satellitennavigationssensoren (175), um einen Maßstab (TS) für die visuelle Odometrienavigation bereitzustellen, wobei der Roboterrasenmäher (100) **dadurch gekennzeichnet ist, dass** die Steuerung (110) ferner konfiguriert ist, um die Grundebenenschätzung basierend auf dem visuellen Sensor (185) durch das Bestimmen einer Höhe über dem Grund für den visuellen Sensor (185) zu nutzen, um den Maßstab (TS) für die visuelle Odometrienavigation bereitzustellen, wobei die Höhe über dem Grund basierend auf einer vorherigen Höhe über dem Grund kalibriert ist.

2. Roboterrasenmäher (100) nach Anspruch 1, wobei die Steuerung (110) ferner konfiguriert ist, um die visuelle Odometrienavigation durch Visual Simultaneous Localization and Mapping, VSLAM, durchzuführen.

3. Roboterrasenmäher (100) nach Anspruch 1 oder 2, wobei der visuelle Sensor (185) ein Monosensor ist.

4. Roboterrasenmäher (100) nach einem der vorstehenden Ansprüche, wobei die Steuerung (110) ferner konfiguriert ist zum
Bestimmen, dass ein Satellitenempfang verloren oder unzuverlässig ist und wenn der Roboterrasenmäher (100) bestimmt, dass der Satellitenempfang verloren oder unzuverlässig ist, sich selbst in einer Punktwolke der visuellen Navigation unter Verwendung von PNP (Perspective-n-Point) ortet und den visuellen Sensor (185) nutzt, um Merkmale in einem Bild zu finden und sie mit den Merkmalen in den vorherigen Bildern abzugleichen, sodass Punkte in dem Bild mit den Punkten in der Punktwolke abgeglichen werden können, um eine Position relativ zu den satellitenbestimmten Positionen ohne das Maßstabsproblem zu erhalten.

5. Roboterrasenmäher (100) nach einem der vorstehenden Ansprüche, wobei der Satellitennavigationssensor ein GPS-Sensor (175) ist.

6. Roboterrasenmäher (100) nach Anspruch 5, wobei der Satellitennavigationssensor ein RTK-Sensor (175) ist.

## Revendications

1. Tondeuse à gazon robotisée (100) comprenant un ou plusieurs capteurs de navigation par satellite (175), un capteur visuel (185) et un dispositif de commande (110), dans laquelle le dispositif de commande (110) est configuré pour
utiliser le ou les capteurs de navigation par satellite (175) pour déterminer une référence pour une estimation de plan de sol et pour
utiliser le capteur visuel (185) afin de réaliser une navigation par odométrie visuelle, et pour
utiliser l'estimation de plan de sol sur la base du capteur visuel (185) et de la référence provenant des capteurs de navigation par satellite (175) afin de fournir une échelle (TS) pour la navigation par odométrie visuelle, dans laquelle la tondeuse à gazon robotisée (100) est **caractérisée en ce que** le dispositif de commande (110) est en outre configuré pour utiliser l'estimation de plan de sol sur la base du capteur visuel (185) en déterminant une hauteur au-dessus du sol pour le capteur visuel (185) afin de fournir l'échelle (TS) pour la navigation par odométrie visuelle, dans laquelle la hauteur au-dessus du sol est étalonnée sur la base d'une hauteur précédente au-dessus du sol.

2. Tondeuse à gazon robotisée (100) selon la revendication 1, dans laquelle le dispositif de commande (110) est en outre configuré pour réaliser la navigation par odométrie visuelle par localisation et cartographie visuelles simultanées, VSLAM.

3. Tondeuse à gazon robotisée (100) selon la revendication 1 ou 2, dans laquelle le capteur visuel (185) est un mono-capteur.

4. Tondeuse à gazon robotisée (100) selon l'une quelconque revendication précédente, dans laquelle le dispositif de commande (110) est en outre configuré pour
déterminer que la réception satellite est perdue ou peu fiable, et lorsque la tondeuse à gazon robotisée (100) détermine que la réception satellite est perdue ou peu fiable, se localiser dans le nuage de points de la navigation visuelle à l'aide du PNP (Perspective-n-Point) et utiliser le capteur visuel (185) pour trouver des caractéristiques dans une image et les faire correspondre avec des caractéristiques dans des images précédentes afin que des points dans l'image puissent être mis en correspondance avec des points dans le nuage de points pour obtenir une position par rapport aux positions déterminées par satellite sans le problème d'échelle.

5. Tondeuse à gazon robotisée (100) selon l'une quelconque revendication précédente, dans laquelle le capteur de navigation par satellite est un capteur GPS (175).

6. Tondeuse à gazon robotisée (100) selon la revendication 5, dans lequel le capteur de navigation par satellite est un capteur RTK (175).
